# EUROPÄISCHE PATENTSCHRIFT

(11) **EP 0 853 860 B1**
(45) Veröffentlichungstag und Bekanntmachung des Hinweises auf die Patenterteilung: **12.11.2003**
(21) Anmeldenummer: 96938927.9
(22) Anmeldetag: 09.09.1996
(51) Int. Cl.: H04Q 7/22, H04Q 7/38

(54) **VERFAHREN ZUM AUFBAU VON NACHRICHTENVERBINDUNGEN FÜR GRUPPEN- UND/ODER SAMMELRUF**
METHOD OF CONNECTION SET-UP FOR GROUP AND/OR CONFERENCE CALLS
PROCEDE D'ETABLISSEMENT DE LIAISONS POUR COMMUNICATIONS DE TYPE GROUPE ET/OU CONFERENCE

(30) Priorität: 05.10.1995 DE 19537101
(43) Veröffentlichungstag der Anmeldung: 22.07.1998
(73) Patentinhaber: SIEMENS AKTIENGESELLSCHAFT, 80333 München (DE)
(72) Erfinder: ECKSTEIN, Tillmann, D-71409 Schwaikheim (DE)
(86) Internationale Anmeldenummer: DE9601688
(87) Internationale Veröffentlichungsnummer: WO97013383

(56) Entgegenhaltungen:
- EP-A- 0 649 266
- EP-A- 0 663 784
- WO-A-95/13686
- US-A- 5 287 542

## Beschreibung

### Stand der Technik

Die Erfindung geht aus von der Gattung, wie im unabhängigen Anspruch 1 angegeben.

Die Gruppenkommunikation VGCS (Voice Group Call Service) innerhalb des Mobilfunksystems auf der Basis der GSM(Global System For Moblile Communications)-Spezifikation erlaubt einer vorbestimmten Gruppe von Teilnehmern die Sprachkonversation im Halbduplex über einen Mobilfunkkanal auch dann, wenn mehrere Teilnehmer pro Funkzelle an der Gruppenkonversation beteiligt sind.

Folgende Begriffe werden für die weitere Beschreibung verwendet:
"Gruppenruf-Kanal" : Kombinierte Auf- und Abwärtsverbindung, die in jeder Funkzelle des versorgungsgebietes für einen bestimmten Gruppenruf aufgebaut werden muß. Die Aufwärtsverbindung kann nur durch den jeweils sprechenden Teilnehmer benutzt werden. Alle Mobilfunkteilnehmergeräte (Mobilstationen) der lediglich zuhörenden Teilnehmer einer Funkzelle empfangen über die gemeinsame Abwärtsverbindung.
"Gruppenmitglieder" sind Teilnehmer, die zu einer bestimmten Gruppe gehören, welche durch eine bestimmte Gruppenidentifikation (Gruppen-ID) gekennzeichnet ist.
"Gruppenruf-Mitglieder" sind Gruppenmitglieder oder Festnetzteilnehmer, die an einem Gruppenruf teilnehmen.
"Gruppenruf-Attribute": Dazu gehören das Versorgungsgebiet (Service Area), Festnetzteilnehmer-Identifikationen (Rufnummern der Festnetzteilnehmer).

Das "Gruppenruf-Register" (Group Call Register) im Mobilfunknetz enthält nach entsprechender Registrierung die Gruppenruf-Attribute.

Die "Gruppenruf-Anker-MSC" (Group Call Anchor MSC) ist diejenige MSC (Mobile Switching Center = Mobilfunkvermittlungsstelle oder -zentrale), die für die Abwicklung und Aufrechterhaltung eines Gruppenrufes zuständig ist.

Eine "Gruppenruf-Relais-MSC" steuert Funkzellen eines Versorgungsgebietes, die nicht von der Gruppen-Anker-MSC gesteuert werden, und zwar für solche Gruppenrufe, bei denen das Versorgungsgebiet über das Versorgungsgebiet einer . Mobilfunkvermittlungsstelle (MSC) hinausgeht.

Zur Zeit werden bei ETSI/SMG (SMG = Special Mobile Group, für GSM zuständig) in der Arbeitsgruppe SMG3 ASCI (ASCI = Advanced Speech Call Items) u.a. die neuen Leistungsmerkmale Gruppenkommunikation (Voice Group Call Service) und Sammelruf [Sprach-Broadcast (Voice Broadcast Service)] standardisiert.

In den Dokumenten Tdoc SMG3 94U134 "Draft GSM 03.68, Version 1.2.0, November 1994, European digital cellular telecommunication system; Voice Group Call Service (VGCS) - Stage 2 (GSM 03.68)" und Tdoc SMG3 94U135 "Draft GSM 03.69, Version 1.2.0, November 1994, European digital cellular telecommunication System; Voice Broadcast Service (VBS) - Stage 2 (GSM 03.69)" wird die technische Realisierung beschrieben.

In beiden Dokumenten ist im Abschnitt 4.2.1.1 vermerkt, daß der Bereich ["service area" einer Gruppenkommunikation bzw. eines Sprach-Broadcast (Sammelrufes)] auf das Versorgungsgebiet einer einzigen Mobilvermittlungsstelle beschränkt werden kann. Als Option bei der Implementierung kann dieses versorgungsgebiet auch größer als das Versorgungsgebiet einer Mobilvermittlungsstelle sein.

In den beiden oben bezeichneten Dokumenten wird beschrieben, daß in eine Gruppenkommunikation bzw. in einen Sammelruf auch Festnetzteilnehmer - in den Dokumenten "Dispatcher" genannt - mit einbezogen werden können.

Die Rufnummern der Dispatcher, die in eine bestimmte Gruppenkommunikation bzw. einen bestimmten Sammelruf mit einbezogen werden sollen, sind im Gruppenruf-Register [Group Call Register (GCR)] gespeichert. (In den Dokumenten wird derzeit von maximal fünf Dispatchern gesprochen).

Beim Aufbau einer Gruppenkommunikation bzw. eines Sammelrufes muß die Gruppenruf-Anker-MSC mit Hilfe der im Gruppenruf-Register gespeicherten Rufnummern der Gruppenruf-Mitglieder die Verbindungen zu den Dispatchern aufbauen.

Im Fall der Gruppenkommunikation werden die Leitungen zu den Dispatchern direkt an eine sogenannte Konferenzbrücke in der Gruppenruf-Anker-MSC geschaltet. Die Dispatcher brauchen im Gegensatz zu den "gewöhnlichen" Gruppenruf-Mitgliedern einen Sprechwunsch nicht zu signalisieren; sie können ständig sprechen.

Im Fall des Sammelrufes werden die Leitungen zu den Dispatchern an die Ausgänge der Verteilfunktion in der Mobilvermittlungsstelle geschaltet.

Eine Gruppenkommunikation bzw. ein Sammelruf kann sowohl von berechtigten Mobilteilnehmern als auch von berechtigten Festnetzteilnehmern aufgebaut werden.

In der Patentanmeldung EP-A-0663784 ist ein Verfahren zum Bearbeiten von Rufen zwischen mobilen und festen Teilnehmerendgeräten beschrieben. Dabei ist eine Mobilnetz-Vermittlung und eine Festnetz-Vermittlung in einem gemischten Kommunikationnetz vorgesehen, das ein Mobilnetz, ein Festnetz und eine Datenbasis aufweist, auf die von den genannten Vermittlungen gemeinsam zugegriffen wird. Diese Vermittlungen rufen aufgrund von Gruppendaten alle oder einige der Teilnehmerendgeräte von Gruppen, die eine Kombination von mobilen und festen Teilnehmerendgeräte aufweisen.

In der Patentanmeldung EP-A-0649666 ist ein Mobilfunknetz mit einer Funkvermittlungsstelle beschrieben, an die eine rechnergesteuerte Konferenzdienst-Einrichtung so angeschlossen ist, daß sie mindestens drei Teilnehmeranschlüsse nachbildet. Diesen sind virtuelle Teilnehmer zugeordnet, zwischen denen die Konferenzdienst-Einrichtung Punkt-Zu-Mehrpunkt-Verbindungen schaltet. Zur Schaltung einer Teilnehmerkonferenz vermittelt die Funkvermittlungsstelle Punkt-Zu-Punkt-Verbindungen zwischen reellen Teilnehmern und den virtuellen Teilnehmern.

In der Patentschrift US-A-5287542 ist für ein Kommunikationsnetz eine zentrale Steuereinheit beschrieben, die auf effiziente Weise den Teilnehmerkreis eines Gruppenrufes ausdehnen kann. Wenn der Teilnehmerkreis einer ersten Kommunikationsgruppe erweitert werden soll, verbindet die zentrale Steuereinheit zumindest einen Teil einer anderen Kommunikationsgruppe mit der ersten Kommunikationsgruppe. Danach bearbeitet die zentrale Steuereinheit die Kommunikation in der ersten Kommunikationsgruppe und in dem Teil der zweiten Kommunikationsgruppe.

Es ist die Aufgabe der vorliegenden Erfindung, ein Verfahren zum Aufbau von Nachrichtenverbindungen für Gruppen- und/oder Sammelruf für Teilnehmergeräte zu schaffen, durch das das Versorgungsgebiet einer Gruppenkommunikation bzw. eines Sammelrufs auf einfache Weise über das Versorgungsgebiet einer Mobil funkvermittlungsstelle ausgedehnt werden kann.

Diese Aufgabe wird durch den Gegenstand des Patentanspruchs 1 gelöst. Vorteilhafte Ausgestaltungen der Erfindung sind Gegenstand der Unteransprüche.

### Vorteile der Erfindung

Der Anmeldungsgegenstand mit den Merkmalen des Patentanspruches 1 hat folgenden Vorteil:
Die Erfindung ermöglicht es, das Versorgungsgebiet einer Gruppenkommunikation bzw. eines Sammelrufes sehr einfach über das Versorgungsgebiet einer Mobilvermittlungsstelle auszudehnen. Das erfindungsgemäße Verfahren erlaubt sogar Gruppenkommunikation bzw. Sammelrufe in verschiedenen Netzen, was z.B. in einem Grenzgebiet sehr vorteilhaft ausgenutzt werden kann.

Die Erfindung nutzt die Tatsache aus, daß die Gruppenruf-Anker-MSC die Funktionalität hat, Dispatcher über die im Gruppenruf-Register gespeicherten Rufnummern in eine Gruppenkommunikation bzw. einen Sammelruf einzubeziehen. Anstelle der Rufnummer eines Dispatchers kann im Gruppenruf-Register auch die Rufnummer für eine weitere Gruppenkommunikation bzw. einen weiteren Sammelruf gespeichert werden.

Über die Vorgabe der im Gruppenruf-Register gespeicherten Rufnummern kann sehr einfach auch z.B. eine Gruppenkommunikation bzw. ein Sammelruf in einem anderen Netz (PLMN, Public Land Mobile Network) zu einer bestehenden Gruppenkommunikation bzw. einem bestehenden Sammelruf "dazugeschaltet" werden. Man könnte dieses Vorgehen als Kaskadierung bezeichnen.

Die Erweiterung des Versorgungsgebietes einer Gruppenkommunikation bzw. eines Sammelrufes auf die beschriebene Art und Weise führt dazu, daß in der Mobilvermittlungsstelle des hinzugenommenen Bereichs für die Gruppenkommunikation bzw. den Sammelruf eine zweite Konferenzbrücke bereitgestellt wird. Dies widerspricht Tdoc SMG3 94U134, Abschnitt 7.1, in dem ausdrücklich vermerkt ist, daß es nur eine Konferenzbrücke geben soll ("...there shall be no secondary bridges in BSCs or group relay MSCs").

Wenn die Kaskadierung von Konferenzbrücken technisch gesehen zu Problemen führen sollte, so kann man die zweite Konferenzbrücke einfach dadurch umgehen, daß man im Erweiterungsbereich (Gebiet außerhalb des Versorgungsgebietes der Gruppen-Anker-MSC) sozusagen jede gewünschte Funkzelle ("Erweiterungszelle") einzeln an die "Hauptkonferenzbrücke" in der Gruppenruf-Anker-MSC anschaltet. Voraussetzung dazu ist, daß den betreffenden Funkzellen entsprechende Rufnummern für eine Gruppenkommunikation zugeordnet worden sind. In diesem Fall sollten im Gruppenruf-Register mehr als die bisher diskutierten fünf Rufnummern für Dispatcher (und "Erweiterungszellen") vorgesehen werden.

### Zeichnung

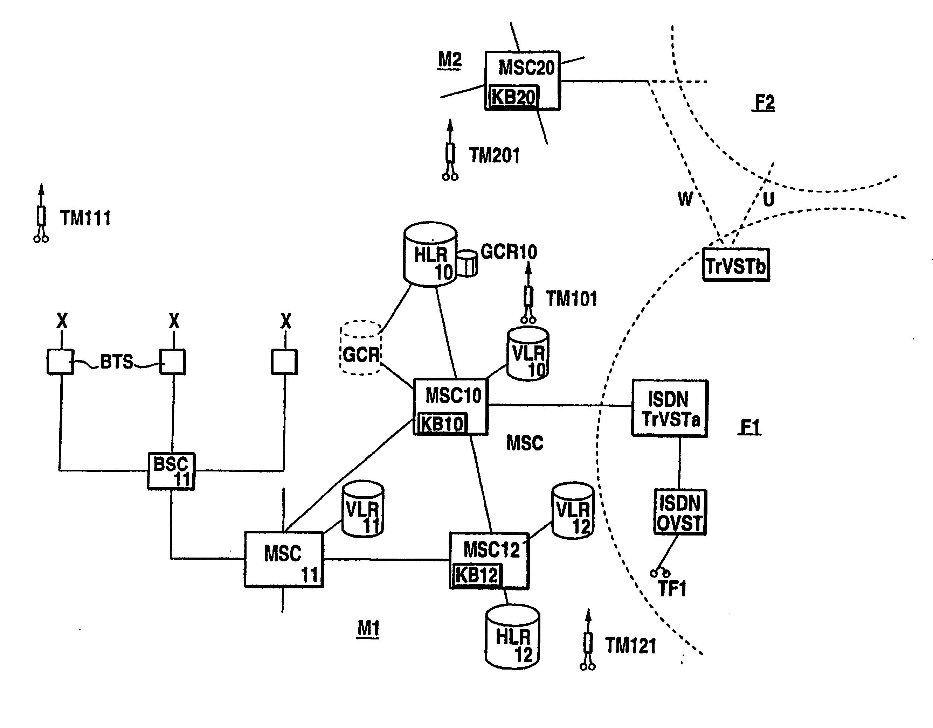

Ein Ausführungsbeispiel der Erfindung ist in der Zeichnung dargestellt und in der nachfolgenden Beschreibung näher erläutert. Gezeigt sind schematisch Teile zweier Mobilfunkund zweier Festnetze.

### Beschreibung eines Ausführungsbeispiels

Anhand der Zeichnung werden bevorzugte Ausführungsbeispiele der Erfindung beschrieben. Für die Mobilfunknetze wird beispielhaft die GSM-Architektur verwendet. Das Mobilfunknetz M1 weist unter anderem folgende Bestandteile auf:
Mobilfunkvermittlungsstellen MSC10, MSC11 und MSC12, von denen die Mobilfunkvermittlungsstelle MSC10 zugleich eine Mobilfunkvermittlungsstelle mit Überleiteinrichtung für den Übergang von und zu einem Festnetz F1 ist;
Basisstationssteuereinheiten (Base Station Controller), von denen jeweils mehrere einer Mobilfunkvennittlungsstelle zugeordnet sein können und von denen hier nur eine, nämlich BSC11 dargestellt ist;
Basisstationen BTS (Base Transeiver Stations), die jeweils von den Basisstationssteuereinheiten gesteuert werden und Funksignale für Mobilfunkteilnehmergeräte abgeben;
Mobilfunkteilnehmergeräte TM111, TM101, TM121, TM201, die sich jeweils in einem Versorgungsgebiet einer Mobilfunkvennittlungsstelle aufhalten;
Besucherdatenbanken VLR10, VLR11, VLR12 (Visitor Location Registers), die jeweils einer Mobilfunkvermittlungsstelle zugeordnet sind und Daten zu denjenigen Mobilfunkteilnehmern bereithalten, die sich in ihren jeweiligen Zuständigkeitsbereichen aufhalten, welche jeweils aus mehreren Funkzellen des Versorgungsgebietes einer Mobilfunkvermittlungsstelle bestehen können;
Heimatregister HLR10, HLR12 (Home Location Register), die über die Rufnummern von Mobilfunkteilnehmergeräten adressiert werden und auch Daten darüber enthalten, welche Besucherdatenbank ein Mobilfunkteilnehmergerät zur Zeit erfaßt hat.

Eine Verbindung zum Festnetz F1 wird über die Mobilfunkvermittlungsstelle mit Überleiteinrichtung MSC10 hergestellt, von welcher in einem Mobilfunknetz mehrere vorhanden sein können. Auf der Festnetzseite (hier einem ISDN-Netz) ist für den Übergang eine Transitvermittlungsstelle TrVSTa vorgesehen, von der aus Verbindungen zu Ortsvermittlungsstellen OVST und schließlich zu Festnetzteilnehmergeräten TF1 geschaltet werden können.

Wird ein Mobilfunkteilnehmergerät aus dem Festnetz F1 angerufen, dann wird die Mobilfunkvermittlungsstelle mit Überleiteinrichtung MSC10 zu einer "Gateway MSC", welche das Heimatregister HLR10 und gegebenenfalls Besucherdatenbanken abfragt und dann für den entsprechenden Verbindungsaufbau sorgt.

Nach den bisherigen Vorstellungen der Standardisierungsgremien für Gruppenkommunikation und Sammelruf sind nun über die bisher beschriebene Architektur eines Mobilfunknetzes hinausgehend noch Gruppenruf-Register vorgesehen, deren Aufstellungsort nicht festgelegt ist. Wie mit unterbrochenen Linien angedeutet, könnte ein solches Gruppenruf-Register GCR' (Group Call Register) abgesetzt von einer Mobilfunkvermittlungsstelle und einem Heimatregister angeordnet sein. Eine andere Möglichkeit besteht in der örtlichen Zuordnung eines Gruppenruf-Registers GCR10 zu einem Heimatregister HLR10.

Ein solches Gruppenruf-Register wird durch die Rufnummer für eine Gruppen- bzw. Sammelrufanforderung adressiert und von der Mobilfunkvermittlungsstelle mit Überleiteinrichtung MSC10 abgefragt. Auf diese Weise erfährt die Mobilfunkvermittlungsstelle mit Überleiteinrichtung, welche Mobilfunk- und/oder Festnetzteilnehmergeräte in die Gruppenkommunikation bzw. in den Sammelruf einbezogen werden sollen und in welchen Funkzellen sie sich befinden.

Die Mobilfunkvermittlungsstelle mit Überleiteinrichtung MSC10, die in diesem Zusammenhang zugleich Gruppenruf-Anker-MSC ist, baut (unabhängig davon, ob die Gruppen- bzw. Sammelrufanforderung von einem Mobilfunkteilnehmergerät oder einem Festnetzteilnehmergerät gekommen ist) die Verbindungen in die einzubeziehenden Zellen und zu den Festnetzteilnehmergeräten (insbesondere zu dem sogenannten Dispatcher oder den Dispatchern) auf.

Der Betrieb läuft dann so ab, daß bei einem Sammelruf nur derjenige Teilnehmer sprechen kann, der den Sammelruf aufgebaut hat (Festnetzteilnehzmer oder Mobilteilnehmer). Die anderen Gruppenruf-Mitglieder könnten nur zuhören.

Bei einem Gruppenruf können dagegen alle Gruppenruf-Mitglieder wechselweise sprechen, wobei durch das Funksystem dafür gesorgt wird, daß immer nur ein einziger Mobilteilnehmer diese Sprecherlaubnis erhält. Festnetzteilnehmer (Dispatcher) können jederzeit sprechen. Der Sprechwunsch eines Mobilteilnehmers wird durch Drücken der Sprechtaste angezeigt (Push-to-talk-Funktion) .

Die Zusammenschaltung aller Übertragungskanäle für den Gruppen- bzw. Sammelruf erfolgt in der Gruppenruf-Anker-MSC MSC10 in einer sog. Konferenzbrücke. Bisher ist vorgesehen, daß hier nur die Verbindungen zu den Dispatchern und zu den Zellen im Versorgungsgebiet (Service Area) zusammengeschaltet werden.

Ziel der erfindungsgemäßen Verfahren ist nun die Erweiterung des Bereichs einer Gruppenkommunikation bzw. eines Sammelrufes durch "Hinzuwählen" einer weiteren Gruppenkommunikation bzw. eines weiteren Sammelrufes über die im Gruppenruf-Register gespeicherten (Dispatcher-) Rufnummern.

Folgende Möglichkeiten eröffnet die Erfindung:
1.1. Weitere Gruppenkommunikation bzw. weiterer Sammelruf im selben Mobilfunknetz (PLMN) M1. Das Protokoll zwischen den Mobilvermittlungsstellen des Mobilfunknetzes M1 (MAP-E) braucht dabei nicht erweitert zu werden.
1.2. Weitere Gruppenkommunkikation bzw. weiterer Sammelruf in einem anderen Mobilfunknetz (PLMN) M2.
2.1. Bei Gruppenkommunikation Schaltung einer weiteren Konferenzbrücke KB12 in einer MSC12 die für den hinzukommenden Bereich zuständig ist. Dieses Verfahren ist nicht auf eine hinzukommende Mobilfunkvermittlungsstelle beschränkt. Das Versorgungsgebiet der Gruppenkommunikation kann theoretisch beliebig viele Mobilvermittlungsstellen umfassen. In jeder Mobilfunkvermittlungsstelle ist dann eine Konferenzbrücke vorzusehen.
2.2. Bei Gruppenkommunikation werden alle hinzuzunehmenden Funkzellen einzeln an die Konferenzbrücke in der Gruppen-Anker-MSC MSC10 angeschlossen.

Am weitesten reicht die Möglichkeit 1.2., bei der durch die Gruppenruf-Anker-MSC MSC10 von dem Gruppenruf-Register GCR10 Daten abgerufen werden (insbesondere eine oder mehrere Gruppen bzw. Sammelrufnummern für ein Mobilfunknetz M2), mit deren Unterstützung über das Festnetz F1 eine zweite Gruppen- bzw. Sammelrufanforderung in dem zweiten Mobilfunknetz M2 veranlaßt wird. Dazu wird die Gruppen- bzw. Sammelrufnummer von einer Transitvermittlungsstelle TrVSTb des Festnetzes F1 wie jede andere Rufnummer entweder über einen Direktweg W oder über einen Umweg U über ein Festnetz F2 in ein Mobilfunknetz M2 übertragen. Dort wird in einer Gruppenruf-Anker-MSC und zugleich Mobilfunkvermittlungsstelle mit Überleiteinrichtung, nämlich in einer Mobilfunkvermittlungsstelle MSC20 eine Konferenzbrucke KB20 für den Gruppen- bzw. Sammelruf im Mobilfunknetz M2 geschaltet, damit zum Beispiel ein Mobilfunkteilnehmergerät TM201 in einer Zelle im Versorgungsgebiet der Mobilfunkvermittlungsstelle MSC20 an der Gruppenkommunikation bzw. an dem Sammelruf teilnehmen kann, der sich an Gruppenruf-Mitglieder aller in der Zeichnung dargestellten Netze M1, M2, F1 und F2 wenden kann.

Zusätzlich oder alternativ kann ein Mobilfunkteilnehmergerät TM121 in einer Zelle im Versorgungsgebiet der Mobilfunkvermittlungsstelle MSC12 in eine Gruppenkommunikation bzw. einen Sammelruf einbezogen werden, indem durch die Gruppenruf-Anker-MSC MSC10 von dem Gruppenruf-Register GCR10 Daten abgerufen werden, mit deren Unterstützung in der Mobilfunkvermittlungsstelle MSC12 eine zweite Gruppen- bzw. Sammelrufanforderung in dem Versorgungsgebiet dieser Mobilfunkvermittlungsstelle MSC12 veranlaßt wird, in welcher dann die Konferenzbrücke KB12 geschaltet wird.

Eine Möglichkeit, auf die Schaltung zusätzlicher Konferenzbrücken KB12 bzw. KB20 zu verzichten, läßt sich dadurch erreichen, daß die Gruppenruf-Anker-MSC MSC10 von dem Gruppenruf-Register GCR10 Daten abruft, mit deren Unterstützung in einer anderen Mobilfunkvermittlungsstelle MSC12 und/oder MSC20 einzelne Ruf-Anforderungen für Gruppenrufe bzw. Sammelrufe in einzelnen Zellen in dem Versorgungsgebiet dieser anderen Mobilfunkvermittlungsstelle MSC12 bzw. MSC20 und/oder in einem Festnetz F1, F2 veranlaßt werden.

Erwähnenswert ist noch, daß dann, wenn MSC10 die Gruppenruf-Anker-MSC ist, MSC11 als sogenannte Relais-MSC dient, sofern die "service area" des Gruppen- oder Sammelrufes Zellen im Versorgungsgebiet sowohl vom MSC10 als ach vom MSC11 umfaßt.

## Patentansprüche

1. Verfahren zum Aufbau von Nachrichtenverbindungen für Gruppen- und/oder Sammelruf für Teilnehmergeräte, von den üblicher Weise wenigstens eines ein Mobilfunkteilnehmergerät (TM111) in einem Mobilfunknetz (M1) ist, aber nicht sein muss, über eine Konferenzbrücke (KB10), die in diesem Mobilfunknetz (M1) nach Eingehen einer Gruppen- bzw. Sammelrufanforderung und anschließender Abfrage eines Gruppenrufregisters (GCR10) durch eine Gruppenruf-Anker-Mobilfunkvermittlungsstelle (MSC10) geschaltet wird,
**dadurch gekennzeichnet,**
**dass** durch die Gruppenruf-Anker-Mobilfunkvermittlungsstelle (MSC10) von dem Gruppenrufregister (GCR10) Daten abgerufen werden, mit deren Unterstützung
- entweder eine zweite Gruppen- bzw. Sammelruf-Anforderung in einem zweiten Mobilfunknetz (M2) veranlasst wird, in welchem eine zweite Konferenzbrücke (KB20) zugeschaltet wird,
- oder bei einer anderen Mobilfunkvermittlungsstelle (MSC12, MSC20) eine zweite Gruppen- bzw. Sammelruf-Anforderung in dem Versorgungsgebiet dieser anderen Mobilfunkvermittlungsstelle (MSC12, MSC20) veranlasst wird, bei der eine zweite Konferenzbrücke (KB12) geschaltet wird.

2. Verfahren nach Anspruch 1,
**dadurch gekennzeichnet,**
**dass** die andere Mobilfunkvermittlungsstelle (MSC20) zu einem zweiten Mobilfunknetz (M2) zugehört und die zweite Gruppen- bzw, Sammelrufanforderung von der Gruppenruf-Anker-Mobilfunkvermittlungsstelle (MSC10) über ein Festnetz (F1) zum zweiten Mobilfunknetz (M2) geleitet wird.

3. Verfahren nach Anspruch 2,
**dadurch gekennzeichnet,**
**dass** die zweite Gruppen- bzw. Sammelruf-Anforderung vom erstgenannten Festnetz (F1) über ein zweites Festnetz (F2) zum zweiten Mobilfunknetz (M2) geleitet wird.

4. Verfahren nach einem der vorangehenden Ansprüche,
**dadurch gekennzeichnet,**
**dass** die Konferenzbrücke (KB10) durch eine Mobilfunkvermittlungsstelle mit Überleiteinrichtung (MSC10) geschaltet wird.

## Claims

1. Method for setting up message connections for a group call and/or a global call for subscriber appliances, at least one of which is normally a mobile radio subscriber appliance (TM111) in a mobile radio network (M1), although it need not be, via a conference link (KB10) which is connected in this mobile radio network (M1) after receiving a group or global call request and subsequent checking of a group call register (GCR10) by a group call anchor mobile radio switching centre (MSC10),
**characterized**
**in that** the group call anchor mobile radio switching centre (MSC10) calls up data from the group call register (GCR10), with whose assistance
- either a second group or global call request is initiated in a second mobile radio network (M2) in which a second conference link (KB20) is connected,
- or a second group or global call request is initiated in another mobile radio switching centre (MSC12, MSC20) in the supply area of this other mobile radio switching centre (MSC12, MSC20), and in which a second conference link (KB12) is connected.

2. Method according to Claim 1,
**characterized**
**in that** the other mobile radio switching centre (MSC20) is part of a second mobile radio network (M2), and the second group or global call request is passed from the group call anchor mobile radio switching centre (MSC10) via a landline network (F1) to the second mobile radio network (M2).

3. Method according to Claim 2,
**characterized**
**in that** the second group or global call request is passed from the first-mentioned landline network (F1) via a second landline network (F2) to the second mobile radio network (M2).

4. Method according to one of the preceding claims,
**characterized**
**in that** the conference link (KB10) is connected by means of a mobile radio switching centre to a gateway device (MSC10).

## Revendications

1. Procédé destiné à l'établissement de communications téléphoniques pour appels groupés et/ou pour appels collectifs d'appareils d'abonnés, parmi lesquels habituellement, mais pas nécessairement, au moins l'un d'eux est un appareil de radio mobile (TM111) dans un réseau de radio mobile (M1), par l'intermédiaire d'une passerelle conférence (KB10), qui est connectée dans ce réseau de radio mobile (M1) après réception d'une demande d'appel groupé et/ou d'appel collectif et interrogation en résultant d'un registre d'appel groupé (GCR10), par un central de commutation de radio mobile (MSC10) à fonction pivot pour les appels groupés,
**caractérisé par le fait**
**que** le central de commutation de radio mobile (MSC10) à fonction pivot pour les appels groupés sollicite du registre d'appel groupé (GCR10) des données avec l'aide desquelles
- ou bien une deuxième demande d'appel groupé et/ou d'appel collectif est provoquée dans un deuxième réseau de radio mobile (M2) dans lequel est connectée une deuxième passerelle conférence (KB20),
- ou bien, dans un autre central de commutation de radio mobile (MSC12, MSC20), une deuxième demande d'appel groupé et/ou d'appel collectif est provoquée dans la zone d'alimentation de cet autre central de commutation de radio mobile (MSC12, MSC20), dans lequel une deuxième passerelle conférence (KB12) est connectée.

2. Procédé selon la revendication 1
**caractérisé par le fait**
**que** l'autre central de commutation de radio mobile (MSC20) fait partie d'un deuxième réseau de radio mobile (M2) et que le central de commutation de radio mobile (MSC10) à fonction pivot pour les appels groupés conduit la deuxième demande d'appel groupé et/ou d'appel collectif, à travers un réseau fixe (F1) vers un deuxième réseau de radio mobile (M2).

3. Procédé selon la revendication 2
**caractérisé par le fait**
**que** la deuxième demande d'appel groupé et/ou d'appel collectif du réseau fixe (F1) cité en premier est conduite à travers un deuxième réseau fixe (F2) vers le deuxième réseau de radio mobile (M2).

4. Procédé selon l'une des revendications précédentes
**caractérisé par le fait**
**que** la passerelle conférence (KB10) est connectée par un central de commutation de radio mobile (MSC10) ayant un dispositif de transfert.
